# EUROPEAN PATENT SPECIFICATION

(11) **EP 2 362 337 B1**
(45) Date of publication and mention of the grant of the patent: **10.10.2018**
(21) Application number: 10154873.3
(22) Date of filing: 26.02.2010
(51) Int. Cl.: G06Q 30/00, H04L 29/08

(54) **SYSTEM AND METHOD TO MEASURE THE EFFECTIVENESS OF CLICK TO CALL ADVERTISEMENT**
SYSTEM UND VERFAHREN ZUM MESSEN DER EFFEKTIVITÄT VON CLICK-TO-CALL-ANZEIGEN
SYSTÈME ET MÉTHODE POUR MESURER L'EFFICACITÉ D'UNE PUBLICITÉ CLICK-TO-CALL

(43) Date of publication of application: 31.08.2011
(73) Proprietor: BlackBerry Limited, Waterloo, ON N2K 0A7 (CA)
(72) Inventor: Preiss, Bruno Richard, Waterloo Ontario N2L 5Z5 (CA); Proulx, David Rene, Waterloo Ontario N2L 0A4 (CA); Gunton, William John, Waterloo Ontario N2V 1K8 (CA)
(74) Representative: Hanna Moore + Curley

(56) References cited:
- EP-A1- 1 939 804
- EP-A2- 1 868 344
- US-A1- 2009 204 901

## Description

### FIELD

The present matter relates to phone calls, and more particularly to phone calls initiated using a "click to call" system.

### BACKGROUND

Mobile devices are often used to make telephone calls using a click to call service. Calls using a click to call service establish a communication link between the mobile device and another party such as a commercial, government or other entity. These communication links are typically established to facilitate a service. The call may be initiated using a network, such as the Internet. For example, a phone number or icon or button may often be displayed in association with an advertisement on a website or may be received via email or a short message service (SMS) or other type of communication. If the phone number, icon or button is selected or "clicked" a call is initiated in order in order to establish the communication link for facilitating a service such as a service that was advertised in association with the phone number.

### BRIEF DESCRIPTION OF THE DRAWINGS

European Patent Application No. EP 1 939 804 A1 ("Using telecom data to enhance web interaction") describes gathering telecom information from a particular user or computing terminal in order to provide a targeted advertisement to that user or computing terminal in response to a search request.

United States Patent Application Publication No. US 2009/0204901 A1 ("End to End Response Enabling Collection and Use of Customer Viewing Preferences Statistics") describes collecting data concerning a user's or group of users' interaction with an advertisement for to maintaining profiles of particular users. The profiles are then used to target advertisements to particular users or particular groups of users.

In order that the subject matter may be readily understood, embodiments are illustrated by way of examples in the accompanying drawings, in which:
**Figure 1** is a block diagram illustrating a communication network;
**Figure 2** is a block diagram illustrating components of a mobile device;
**Figure 3** is a block diagram illustrating components of a click to call system;
**Figure 4** is a block diagram illustrating components of a system for monitoring click to call information; and,
**Figure 5** is a flow chart depicting a method of monitoring click to call information.

### DETAILED DESCRIPTION

The invention concerns a method as in claim 1, an apparatus as in claim 8 and a system as in claim 9.

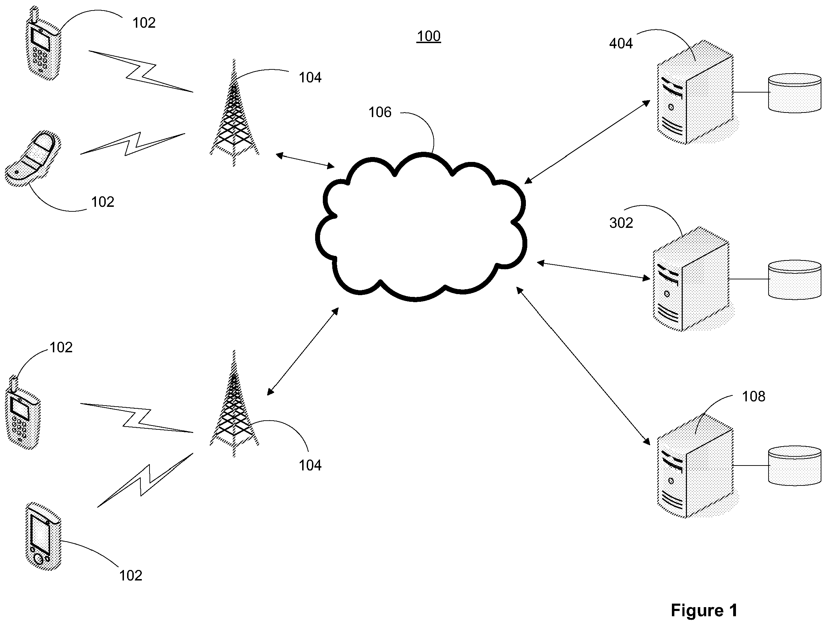

For convenience, like numerals in the description refer to like structures in the drawings. Referring to Figure 1, a typical telecommunication infrastructure is illustrated generally by numeral 100. The telecommunication infrastructure 100 includes a plurality of mobile devices 102, a plurality of base stations 104, a communication network 106 and a plurality of network servers. The network servers may, for example include a collection server 404, a remote server (i.e. a click to call provider) 302, or other types of network servers (e.g. a Web server, an application server, a commerce transaction server, a web store server, etc.).

The mobile devices 102 include wireless computing devices such as a smart phone, a personal digital assistant (PDA), and the like. The mobile devices 102 are in communication with one of the base stations 104. The base stations relay data between the mobile devices 102 and the network servers 108 via the communication network 106. Accordingly, the communication network 106 may include several components such as a wireless network, a relay, a corporate server and/or a mobile data server for relaying data between the base stations 104 and the network servers 108.

It will be appreciated by a person of ordinary skill in the art that the telecommunication infrastructure 100 described herein is exemplary and that changes may be made to one or more components to accommodate different network configurations without affecting the scope of the aspects described herein.

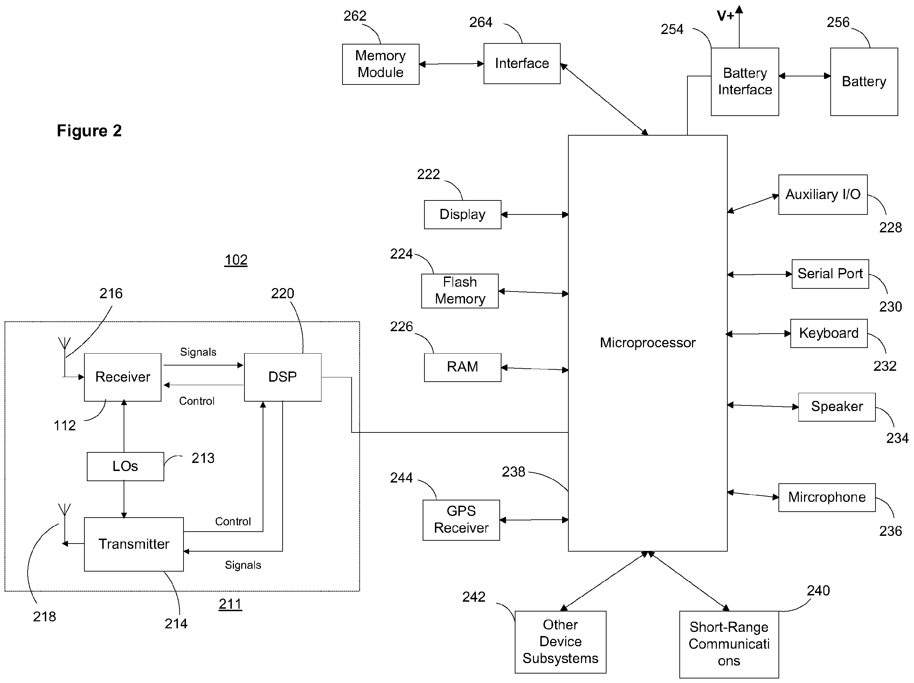

Referring to Figure 2, a typical mobile device 102 is illustrated in greater detail. The mobile device 102 is often a two-way communication device having both voice and data communication capabilities, including the capability to communicate with other computer systems. Depending on the functionality provided by the mobile device 102, it may be referred to as a data messaging device, a two-way pager, a cellular telephone with data messaging capabilities, a wireless Internet appliance, or a data communication device.

The mobile device 102 includes a communication subsystem 211, which includes a receiver 212, a transmitter 214, and associated components, such as one or more embedded or internal antenna elements 216 and 218, local oscillators (LOs) 213, and a processing module such as a digital signal processor (DSP) 220. As will be apparent to those skilled in field of communications, the particular design of the communication subsystem 211 depends on the communication network in which mobile device 102 is intended to operate.

The mobile device 102 includes a microprocessor 238, which controls general operation of the mobile device 102. The microprocessor 238 also interacts with additional device subsystems such as a display 222, a flash memory 224, a random access memory (RAM) 226, auxiliary input/output (I/O) subsystems 228, a serial port 230, a keyboard 232, a speaker 234, a microphone 236, a short-range communications subsystem 240 such as Bluetooth™ for example, and any other device subsystems or peripheral devices generally designated at 242. The mobile device 102 may also include a positioning device 244, such as a GPS receiver, for receiving positioning information.

Operating system software used by the microprocessor 238 is preferably stored in a persistent store such as the flash memory 224, which may alternatively be a read-only memory (ROM) or similar storage element (not shown). Those skilled in the art will appreciate that the operating system, specific device applications, or parts thereof, may be temporarily loaded into a volatile store such as RAM 226.

The microprocessor 238, in addition to its operating system functions, preferably enables execution of software applications on the mobile device 102. A predetermined set of applications, which control basic device operations, is installed on the mobile device 102 during its manufacture. These basic operations typically include data and voice communication applications, for example. Additionally, applications may also be loaded onto the mobile device 102 through the network 106, an auxiliary I/O subsystem 228, serial port 230, short-range communications subsystem 240, or any other suitable subsystem 242, and installed by a user in RAM 226, or preferably the persistent store 224, for execution by the microprocessor 238. Such flexibility in application installation increases the functionality of the mobile device 102 and may provide enhanced on-device features, communication-related features, or both.

The display 222 is used to visually present an application's graphical user interface (GUI) to the user. The user can manipulate application data by modifying information on the GUI using an input device such as the keyboard 232 for example. Depending on the type of mobile device 102, the user may have access to other types of input devices, such as, for example, a scroll wheel, trackball, light pen or touch sensitive screen.

### Click-to-call

Click to call is a process of converting web-based traffic into direct telephony communication between an end user and a third party. Typically, the user will provide (or will have previously provided) a phone number to a click to call provider before initiating a call using a click to call function. The click to call provider may also provide a client application for installation at the mobile device. Thus, when a user initiates the click to call function, the client application will indicate to the click to call provider the identity of the user who initiated the click to call function. This identity may, for example, be a phone number or email address. Alternatively, the user may be prompted for identification or for an email address, etc. in response to selecting a click to call icon or click to call initiator.

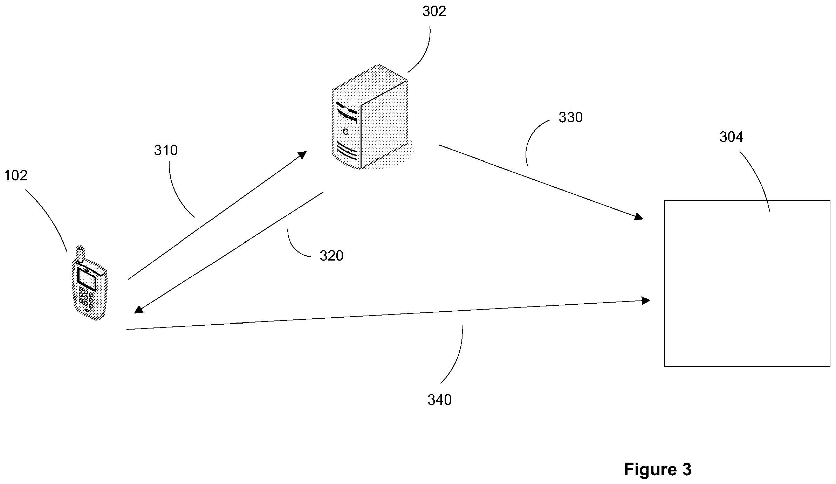

Figure 3 shows a block diagram of the components involved in an implementation of a click to call system. A mobile device 102 is in communication with a server 302. A third party 304 is, initially, only in communication with the server 302.

The click to call function may be initiated using the mobile device 102 that has access to a network such as the Internet. Although the present matter will be described in reference to a mobile device 102, it is recognized that the click to call function may alternatively be initiated at a desktop computer, laptop computer or other electronic device that may have access to a communications network. A user initiates the click to call function by activating (e.g. selecting or clicking on) a click to call initiator. The click to call initiator may be a phone number or icon or advertisement displayed on a website accessible using, for example, a browser on a user's mobile device 102. For example, there may be a banner or a sidebar depicting advertising slogans or trade-marks which, when selected, initiates the click to call communication. By way of further example, there may be a phone number embedded or displayed within an advertising slogan or logo which, when selected, initiates the click to call communication. This click to call function may be used to initiate communication between the mobile device 102 and the third party 304 via a communications network. The third party 304 may, for example, be the advertiser or a service provider described or referred to in the displayed advertisement. Alternatively, the click to call function may be used for accessing an advertised service via a communications network.

When the click to call communication is initiated or activated (e.g. by selecting a click to call icon displayed on a website), a message is communicated to the server 302 (shown as arrow 310). This message may contain information such as the identity of the mobile device 102 or of the user who initiated the click to call communication or the identification the selected recipient or service associated with the click to call communication (e.g. the advertiser or the service provider advertised in the click to call initiator or icon). The selected recipient or service may be the advertiser or a service provider advertised in the click to call icon, for example. In the implementation or embodiment of the click to call system shown in the Figures, the recipient is the third party 304.

The server 302 receives the message and may optionally send a further message 330 to the third party 304. This further message 330 may contain an indication that a click to call communication has been initiated with the third party 304 as the intended recipient. There may be further communications between the server 302 and the third party 304 relating to the click to call communication that will be familiar to a person of ordinary skill in the art. For example, the third party 304 may send a message to the server 302 indicating that the third party 304 acknowledges or accepts the click to call communication.

The server 302 then calls 320 the mobile device 102. When the call or communication is received at the mobile device 102 (i.e. the phone call is answered), the server 302 initiates a call 340 to the third party 304 on behalf of the mobile device 102. For example, when the mobile device 102 answers the call, the third party 304 (being the intended recipient of the click to call) is called by the mobile device 102. A line of voice communication is now established between the mobile device 102 and the third party 304. It is recognized that after the voice communication connection is established between the mobile device 102 and the third party 304, the server 302 drops off or disengages from the connection. From the perspective of the mobile device 102, after the click to call is initiated, the mobile device 102 receives a call and, when answered, a call is initiated to the third party 304 (i.e. the third party 304 is called).

It is recognized that the server 302 may initiate a call 340 to the third party 304 on behalf of the mobile device 102 before the call 320 is received at the mobile device 102.

It is further recognized that the server 302 may initiate a call 340 to the third party 304 on behalf of the mobile device 102 in response to receiving the initiating communication 310 from the mobile device 102. Therefore, this call 340 may establish a direct voice communication connection between the mobile device 102 and the third party 304 without the server calling 320 the mobile device 102. From the perspective of the mobile device 102 the initial click from the mobile device 102 initiates a call (i.e. voice communication) to the third party 304.

The click to call service may be linked to a particular user's phone number (e.g. the phone number provided by or on behalf of the user to the click to call provider) so that whichever device or browser the click to call function is initiated from (e.g. a different mobile device than the one to which the phone number is associated, or a desktop computer), the same phone number is used to connect calls. Thus, a user may initiate a click to call using a browser on a desktop computer and the click to call provider 302 may then call 320 that user's mobile device 102 in order to connect the mobile device 102 and the receiver 304.

The click to call provider may be the remote server 302. The server 302 may have a database with phone numbers and associated email addresses, which may have been provided along with (or when registering) the phone number with the server 302. Thus, when a mobile device 102 (or a user of a mobile device 102) initiates a click to call function, the remote server 302 (i.e. the click to call provider) will have an email address associated with that number.

It is recognized that there may be multiple click to call providers 302 that a mobile device 102 may use for initiating a click to call communication with a third party 302.

When a call is initiated using the click to call function, the provider or server 302 will first be contacted with an HTTP request including, for example, an identification of the user. The provider 302 may then retrieve the user's mobile device 102 phone number (located using the identification provided either in the HTTP request or earlier via a prompt, e.g.) and call that phone number. When (and if) the user answer's the call on the mobile device 102, the provider 302 will initiate a call to the requested number (i.e. the number/name/organization/service 304 initially selected through the browser on the mobile device 102), which may also be stored in the provider's 302 database or which may have been provided to the provider 302 by the mobile device 102.

If the call to the requested number is successful, the provider may send a confirmation email message to the user of the mobile device 102 confirming the successful connection. The user may have provided the server 302 with the email address earlier (e.g. via a prompt). Alternatively or additionally, the third party 302 may send a confirmation email message to the user of the mobile device 102.

A phone number displayed on a website that is accessible using a click to call function may connect a caller with an automated service (e.g. an automated digital service). For example, a user may call a number and be connected with an automated or recorded voice that prompts the user to press a number or a sequence of numbers on the phone's numeric keypad. This type of automated service may be used to direct the caller to an appropriate person or department. For example, the number may be for a company, and the caller may be attempting to access that company's technical support group. The automated service may prompt the caller to make certain selections, associated with numbers, (e.g. "press one if your call is about a technical issue...") to assist the caller in accessing the technical support group. Once a number is pressed in response, the caller may be further prompted for a number, may be redirected to another number or may be connected with a person. Alternatively, an automated service may be voice activated. For example, a caller may be prompted with a selection from an automated or recorded voice (e.g. "say 'technical assistance' if you want to speak with a technical specialist..."). The automated service may redirect the caller, further prompt the caller, or connect the caller to a person in response to (and depending on) a voice input from the caller.

### Monitoring Click to Call Information

### Agent 402

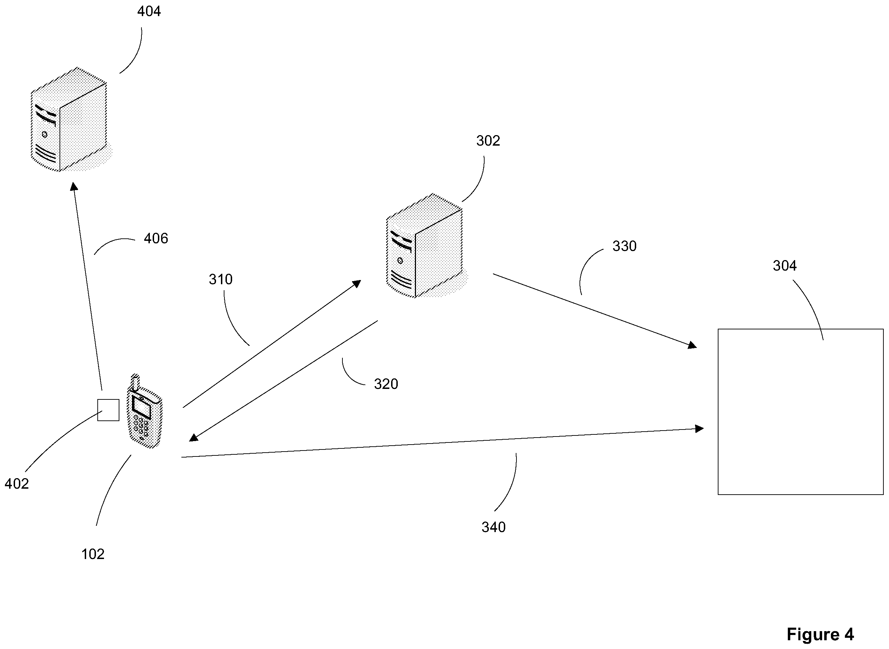

Referring to Figure 4, an agent 402 is associated with the mobile device 102. The agent 402 may reside in the hardware of the mobile device 102 or is otherwise implemented on the mobile device 102. The agent 402 may, for example, be running (e.g. executing on its processor instructions stored in memory) on the operating system of the mobile device 102. In particular, the agent 402 may be running in the background of the mobile device 102. The agent 402 may be a separate application that can be installed on the mobile device 102. For example, the agent 402 may be a plug-in or may be pushed to the device by a remote server 302.

The agent 402 may be in communication with a collection server 404. The agent 402 monitors click to call information from communications initiated by a click to call function from the mobile device 102. For example, the click to call icon displayed on a website may comprise a phone number encoded in HTML. Specific HTML tags, which are known to those skilled in the art, may encode a phone number in a web page. These tags may indicate that the phone number encoded along with the tags is to be subject to a click to call tracking or monitoring by the agent 402.

The agent 402 may also log this monitored information into a log file. The log file may be a data file familiar to a person of skill in the art. Additionally, the agent 402 may send 406 this monitored and/or logged information to the collection server 404.

In another embodiment the collection server 404 is the same as the click to call provider 302. The collection server 404 receives information such as logged information communicated to it from a number mobile devices 102.

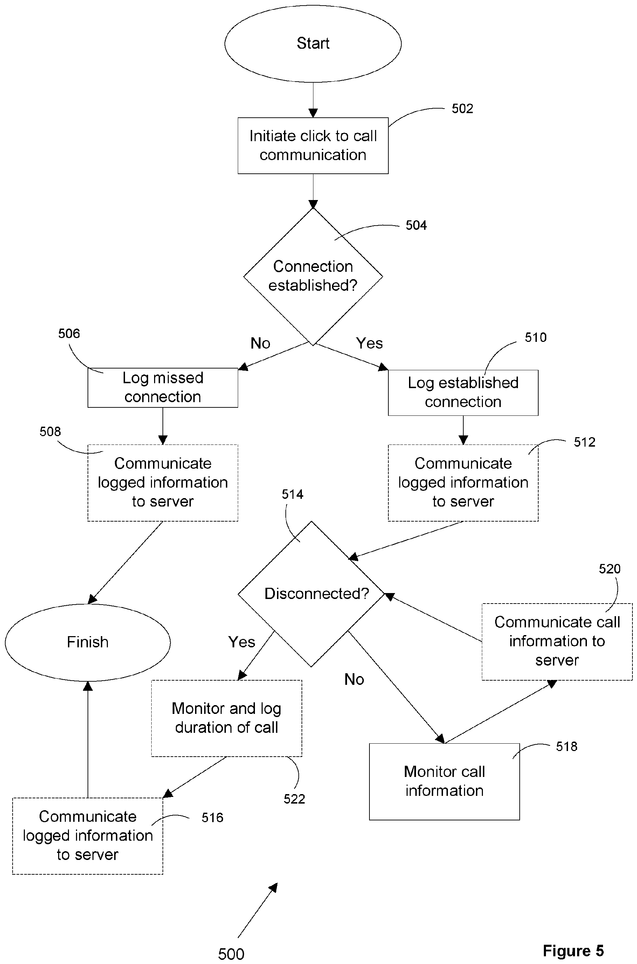

A method of monitoring click to call information is depicted in the flow chart of Figure 5.

At step 502, the click to call communication is initiated. This step may be performed on a mobile device 102, as described above, for example. This initiation includes the mobile device 102 communicating with the server 302 (e.g. over the Internet through a selection of a click to call icon on a website). The initiation also includes and the server 302 calling the third party 304 on behalf of the mobile device 102.

At step 504, a determination is made as to whether a connection is established. For example, if a voice communication line is established between the third party 304 and the mobile device 102 (i.e. if the third party 304 answers the call 340 made from the mobile device 102), then the connection is established.

If a connection between the mobile device 302 and the third-party 304 is not established then, at step 506 the agent 402 logs the missed connection and may store the logged information in memory. The logged information may, for example, include the time of the attempted connection, an identification of the third party 304 and/or an identification of the mobile device 102.

Optionally, at step 508, the agent 402 may communicate this logged information to the collection server 404.

If a connection between the mobile device 302 and the third-party 304 is established then, at step 510, the agent 402 logs the established connection and may store the logged information in memory. For example, the agent 402 may store in memory the phone number of the third party 304 as well as an indication of whether the connection between the mobile device 102 and the third party 304 was established. If the phone number of the third party 304 is not available to the agent 302, then the agent 302 may store in memory an identification of the third party 304 (e.g. as retrieved from the click to call advertisement or icon used to initiate the click to call communication) along with an indication of whether the connection between the mobile device 102 and the third party 304 was established.

Optionally, at step 512, the agent may communicate this logged information to the collection server 404.

At step 514 a determination is made as to whether the communication between the third party 304 or provider and the mobile device 102 is disconnected. This information is accessible on the mobile device 102 and is therefore accessible by the agent 402.

If the communication between the mobile device 302 and the third-party 304 is disconnected then, at step 516, the agent 402 may communicate the logged information to the collection server 404. Optionally, the agent 402 may monitor the duration of the call and may log the duration after the call is disconnected. This logging of the duration of the call occurs before the optional step 516 of communicating the logged information to the collection server 404.

If the communication between the mobile device 302 and the third-party 304 is not disconnected then, at step 518, the agent 402 monitors the call information. Call information may, for example, comprise the following:
- a running tally of the number of calls that were successfully or unsuccessfully made from the mobile device 102 to particular third parties 304;
- whether a confirmation email was sent in response to a communication between the mobile device 102 and the third party 304;
- the Dial-tone Multi-frequency (DTMF) tones emitted during a communication between the mobile device 102 and the third party 304;
- selections made in response to each particular third party's 304 automated service provider; and/or
- duration of the call.

Optionally, at step 520, the agent may communicate this call information to the collection server 404. The agent 402 or the mobile device 102 may again determine whether the communication between the mobile device 302 and the third-party 304 is disconnected.

It is recognized that further logging and/or monitoring may occur after the communication between the modular device 102 and server 302 is disconnected.

### Collection Server 404

The collection server 404 is in communication with the agent 402 of the mobile device 102. The collection server 404 may be in communication with agents 402 of more than one additional mobile device 102.

The collection server 404 may have a processor and a memory for at least storing a database of information. The database of information may, for example, be populated with the call information communicated from the agent(s) 402 to the collection server 404.

The collection server 404 may aggregate the call information received from multiple agents 402 in its database in order to provide a measurement of call activity in relation to click to call communications (e.g. advertisements). For example, the call information may be organized with respect to the identification or phone number of a number of third parties 304. The database may store information such as a running tally of the number of calls that were successfully or unsuccessfully made from the mobile device 102 to particular third parties 304; whether a confirmation email was sent in response to a communication between the mobile device 102 and the third party 304; the DTMF tones emitted during a communication between the mobile device 102 and the third party 304; selections made in response to each particular third party's 304 automated service provider; and/or statistical information regarding the duration of such successful communications (e.g. the average, longest, shortest duration of call). Other information familiar to a person of ordinary skill in the art may be maintained in the database.

The information maintained by the collection server 404 may be used to measure the effectiveness of click to call advertising. For example, the statistics regarding the duration and number of established communications between the third party 302 and mobile devices 102 provides an indication of the number of time an advertisement associated with the click to call has been effective.

The information maintained by the collection server 404 may be updated in real time through communications made from the agent 402 to the collection server 404. For each additional click to call communication attempt from the mobile device 102, the agent 402 associated with that mobile device 102 may communicate call information for the additional click to call communication(s) to the collection server 404. The collection server 404 updates its database on receipt of the call information.

The collection server 404 may provide the database information to other client devices or to third parties 304. For example, the database information maintained by the collection server 404 in relation to a particular third party 304 may be communicated to that third party 304. The third party 304 may then use that information to better target its advertising (e.g. its click to call advertisements).

One or more currently preferred embodiments have been described by way of example. It will be apparent to persons skilled in the art that a number of variations and modifications can be made without departing from the scope of what is defined in the claims.

## Claims

1. A method of collecting click to call information between each of a plurality of communication devices (102) and a third party (304), the method comprising the steps of:
for each of the plurality of communication devices, initiating at an individual one of the plurality of communication devices (102) a click to call function related to a particular advertisement, the initiating effecting communication between the individual one of the communication devices and a first server (302) via a HTTP request, the initiation also including the first server (302) calling the third party (304) on behalf of the communication device (102) to establish a voice communication line between the third party (304) and the communication device (102);
monitoring click to call communications over the voice communication line between each of the plurality of communication devices (102) and the third party (304) to generate click to call information for each of the plurality of communication devices;
logging into a log file the click to call information for each of the plurality of communication devices (102);
communicating the click to call information to a second server (404) configured to collect click to call information from the plurality of communication devices (102);
aggregating the click to call information from each of the plurality of communication devices (102) to measure call activity for the particular advertisement; and
communicating the aggregated click to call information to the third party.

2. The method of collecting click to call information of claim 1 wherein the communication devices are mobile devices (102).

3. The method of collecting click to call information of claims 1 or 2 wherein the step of monitoring the click to call communications related to a particular advertisement comprises monitoring whether a click to call communication is established between each of the plurality of communication devices (102) and the third party (304) to generate the click to call information related to a particular advertisement for each of the plurality of communication devices.

4. The method of collecting click to call information of claims 1, 2 or 3 wherein the step of monitoring the click to call communications related to a particular advertisement comprises monitoring a duration of a click to call communication established between each of the plurality communication devices (102) and the third party (304) to generate the click to call information related to a particular advertisement for each of the plurality of communication devices.

5. The method of collecting click to call information of any one of claims 1 to 4 wherein the step of monitoring the click to call communications related to a particular advertisement comprises monitoring whether a confirmation email was received at each of the plurality of communication devices in response to the click to call communication (340) being established to generate the click to call information related to a particular advertisement for each of the plurality of communication devices.

6. The method of collecting click to call information of any one of claims 1 to 5 wherein the step of monitoring the click to call communications related to a particular advertisement comprises monitoring selections made in response to the third party's (304) automated service provider to generate the click to call information related to a particular advertisement for each of the plurality of communication devices.

7. The method of collecting click to call information of any one of claims 1 to 6 wherein the step of monitoring the click to call communications related to a particular advertisement comprises monitoring the number of dial-tone multi-frequency tones emitted during communication between each of the plurality of communication devices (102) and the third party (304) to generate the click to call information related to a particular advertisement for each of the plurality of communication devices.

8. A communication device (102) comprising a processor and a memory coupled thereto and a communication sub-system, coupled to the processor, for communicating with a third party (304) using a click to call service, the communication device (102) further comprising an agent (402), said memory storing instructions and data for execution by the processor to configure the agent (402) to:
for each of the plurality of communication devices, initiate at an individual one of the plurality of communication devices (102) a click to call function related to a particular advertisement, wherein the initiation effects communication between the individual one of the communication devices and a first server (302) via a HTTP request, and wherein the initiation also includes the first server (302) to call the third party (304) on behalf of the communication device (102) and establish a voice communication line between the third party (304) and the communication device (102);
monitor click to call communications over the voice communication line between each of the plurality of communication devices (102) and the third party (304) to generate click to call information for each of the plurality of communication devices;
log into a log file the click to call information for each of the plurality of communication devices (102); and
communicate the click to call information to a second server (404) configured to collect click to call information from the plurality of communication devices (102) for subsequent aggregation to measure call activity for the particular advertisement and for subsequent communication to the third party.

9. A system, comprising:
a second server (404) for receiving call information from each of a plurality of communication devices (102), each device comprising:
a processor and a memory coupled thereto and a communication sub-system,
coupled to the processor, for communicating with a third party (304) using a click to call service, the communication device further comprising an agent (402), said memory storing instructions and data for execution by the processor to configure the agent (402) to:
for each of the plurality of communication devices, initiate at an individual one of the plurality of communication devices (102) a click to call function related to a particular advertisement, wherein the initiation effects communication between the individual one of the communication devices and a first server (302) via a HTTP request, and
wherein the initiation also includes the first server (302) to call the third party (304) on behalf of the communication device (102) and establish a voice communication line between the third party (304) and the communication device (102);
monitor a click to call communication over the voice communication line between the communication device (102) and the third party (304) to generate click to call information related to a particular advertisement;
log into a log file the click to call information; and
communicate the click to call information to the second server (404) configured to collect click to call information from a plurality of communication devices (102),
the second server configured for aggregating the click to call information from each of the agents (402) to measure call activity for the particular advertisement, and
the first server configured for communicating the aggregated click to call information to the third party.

10. The system of claim 9 wherein the second server (404) communicates the log files to the third party (304).

11. The system of claims 9 or 10 wherein the agent (402) is configured to monitor a duration of the click to call communication and log the monitored duration into the log file.

12. The system of any one of claims 9 to 11 wherein the agent (402) is configured to monitor whether a confirmation email was received at the mobile device (102) in response to the click to call communication being established and store the monitored confirmation in the log file.

13. The system of any one of claims 9 to 12 wherein the agent (402) is configured to monitor selections made in response to the third party's (304) automated service provider and stores the monitored selections in the log file.

14. The system of any one of claims 9 to 13 wherein the agent (402) monitors the number of dial-tone multi-frequency tones emitted during a communication between the mobile device (102) and the third party (304)and logs the monitored number in the log file.

## Patentansprüche

1. Verfahren zum Sammeln von Click-to-call-Informationen zwischen jeder aus einer Mehrzahl von Datenübertragungsvorrichtungen (102) und einem Dritten (304), wobei das Verfahren die Schritte umfasst:
für jede aus der Mehrzahl von Datenübertragungsvorrichtungen Auslösen, an einer einzelnen aus der Mehrzahl von Datenübertragungsvorrichtungen (102), einer eine spezielle Werbung betreffenden Click-to-call-Funktion, wobei das Auslösen eine Datenübertragung zwischen der einzelnen aus den Datenübertragungsvorrichtungen und einem ersten Server (302) über eine HTTP-Anfrage bewirkt, wobei das Auslösen außerdem beinhaltet, dass der Server (302) den Dritten (304) im Namen der Datenübertragungsvorrichtung (102) anruft, um eine Sprach-Datenübertragungsleitung zwischen dem Dritten (304) und der Datenübertragungsvorrichtung (102) herzustellen;
Überwachen von Click-to-call-Datenübertragungen über die Sprach-Datenübertragungsleitung zwischen jeder aus der Mehrzahl von Datenübertragungsvorrichtungen (102) und dem Dritten (304), um Click-to-call-Informationen für jede aus der Mehrzahl von Datenübertragungsvorrichtungen zu erzeugen;
Protokollieren der Click-to-call-Informationen für jede aus der Mehrzahl von Datenübertragungsvorrichtungen (102) in einer Protokolldatei;
Übertragen der Click-to-call-Informationen zu einem zweiten Server (404), der derart konfiguriert ist, dass er Click-to-call-Informationen von der Mehrzahl von Datenübertragungsvorrichtungen (102) sammelt;
Aggregieren der Click-to-call-Informationen von jeder aus der Mehrzahl von Datenübertragungsvorrichtungen (102) zum Messen einer Anrufaktivität für die spezielle Werbung; und Übertragen der aggregierten Click-to-call-Informationen zu dem Dritten.

2. Verfahren zum Sammeln von Click-to-call-Informationen nach Anspruch 1, wobei die Datenübertragungsvorrichtungen mobile Vorrichtungen (102) sind.

3. Verfahren zum Sammeln von Click-to-call-Informationen nach Anspruch 1 oder 2, wobei der Schritt eines Überwachens der eine spezielle Werbung betreffenden Click-to-call-Datenübertragungen ein Überwachen umfasst, ob eine Click-to-call-Datenübertragung zwischen jeder aus der Mehrzahl von Datenübertragungsvorrichtungen (102) und dem Dritten (304) hergestellt wird, um die eine spezielle Werbung betreffenden Click-to-call-Informationen für jede aus der Mehrzahl von Datenübertragungsvorrichtungen zu erzeugen.

4. Verfahren zum Sammeln von Click-to-call-Informationen nach Anspruch 1, 2 oder 3, wobei der Schritt eines Überwachens der eine spezielle Werbung betreffenden Click-to-call-Datenübertragungen ein Überwachen einer Dauer einer Click-to-call-Datenübertragung umfasst, die zwischen jeder aus der Mehrzahl von Datenübertragungsvorrichtungen (102) und dem Dritten (304) hergestellt wird, um die eine spezielle Werbung betreffenden Click-to-call-Informationen für jede aus der Mehrzahl von Datenübertragungsvorrichtungen zu erzeugen.

5. Verfahren zum Sammeln von Click-to-call-Informationen nach einem der Ansprüche 1 bis 4, wobei der Schritt eines Überwachens der eine spezielle Werbung betreffenden Click-to-call-Datenübertragungen ein Überwachen umfasst, ob eine Bestätigungs-E-Mail an jeder aus der Mehrzahl von Datenübertragungsvorrichtungen als Reaktion darauf empfangen wurde, dass die Click-to-call-Datenübertragung (340) hergestellt wird, um die eine spezielle Werbung betreffenden Click-to-call-Informationen für jede aus der Mehrzahl von Datenübertragungsvorrichtungen zu erzeugen.

6. Verfahren zum Sammeln von Click-to-call-Informationen nach einem der Ansprüche 1 bis 5, wobei der Schritt eines Überwachens der eine spezielle Werbung betreffenden Click-to-call-Datenübertragungen ein Überwachen von Auswahlen umfasst, die als Reaktion auf den einen automatischen Dienst anbietenden Anbieter des Dritten (304) getroffen werden, um die eine spezielle Werbung betreffenden Click-to-call-Informationen für jede aus der Mehrzahl von Datenübertragungsvorrichtungen zu erzeugen.

7. Verfahren zum Sammeln von Click-to-call-Informationen nach einem der Ansprüche 1 bis 6, wobei der Schritt eines Überwachens der eine spezielle Werbung betreffenden Click-to-call-Datenübertragungen ein Überwachen der Anzahl von Zweiton-Mehrfrequenztönen umfasst, die während einer Datenübertragung zwischen jeder aus der Mehrzahl von Datenübertragungsvorrichtungen (102) und dem Dritten (304) ausgesendet werden, um die eine spezielle Werbung betreffenden Click-to-call-Informationen für jede aus der Mehrzahl von Datenübertragungsvorrichtungen zu erzeugen.

8. Datenübertragungsvorrichtung (102), die einen Prozessor und einen mit diesem gekoppelten Speicher sowie ein mit dem Prozessor gekoppeltes Datenübertragungs-Teilsystem umfasst, zum Datenaustausch mit einem Dritten (304) unter Verwendung eines Click-to-call-Dienstes, wobei die
Datenübertragungsvorrichtung (102) ferner einen Agenten (402) umfasst, wobei der Speicher Anweisungen und Daten zum Ausführen durch den Prozessor speichert, zum Konfigurieren des Agenten (402) zum:
Auslösen, für jede aus der Mehrzahl von Datenübertragungsvorrichtungen, an einer einzelnen aus der Mehrzahl von Datenübertragungsvorrichtungen (102), einer eine spezielle Werbung betreffenden Click-to-call-Funktion, wobei das Auslösen eine Datenübertragung zwischen der einzelnen aus den Datenübertragungsvorrichtungen und einem ersten Server (302) über eine HTTP-Anfrage bewirkt, und wobei das Auslösen außerdem beinhaltet, dass der erste Server (302) den Dritten (304) im Namen der Datenübertragungsvorrichtung (102) anruft und eine Sprach-Datenübertragungsleitung zwischen dem Dritten (304) und der Datenübertragungsvorrichtung (102) herstellt;
Überwachen von Click-to-call-Datenübertragungen über die Sprach-Datenübertragungsleitung zwischen jeder aus der Mehrzahl von Datenübertragungsvorrichtungen (102) und dem Dritten (304), um Click-to-call-Informationen für jede aus der Mehrzahl von Datenübertragungsvorrichtungen zu erzeugen;
Protokollieren der Click-to-call-Informationen für jede aus der Mehrzahl von Datenübertragungsvorrichtungen (102) in einer Protokolldatei; und
Übertragen der Click-to-call-Informationen zu einem zweiten Server (404), der derart konfiguriert ist, dass er Click-to-call-Informationen von der Mehrzahl von
Datenübertragungsvorrichtungen (102) zum späteren Aggregieren, um eine Anrufaktivität für die spezielle Werbung zu messen, und zum späteren Übertragen zu dem Dritten sammelt.

9. System, das umfasst:
einen zweiten Server (404) zum Empfangen von Anrufinformationen von jeder aus einer Mehrzahl von Datenübertragungsvorrichtungen (102), wobei jede Vorrichtung umfasst:
einen Prozessor und einen mit diesem gekoppelten Speicher sowie ein mit dem Prozessor gekoppeltes Datenübertragungs-Teilsystem zum Datenaustausch mit einem Dritten (304) unter Verwendung eines Click-to-call-Dienstes, wobei die Datenübertragungsvorrichtung ferner einen Agenten (402) umfasst, wobei der Speicher Anweisungen und Daten zum Ausführen durch den Prozessor speichert, zum Konfigurieren des Agenten (402) zum:
Auslösen, für jede aus der Mehrzahl von Datenübertragungsvorrichtungen, an einer einzelnen aus der Mehrzahl von Datenübertragungsvorrichtungen (102), einer eine spezielle Werbung betreffenden Click-to-call-Funktion, wobei das Auslösen eine Datenübertragung zwischen der einzelnen aus den Datenübertragungsvorrichtungen und einem ersten Server (302) über eine HTTP-Anfrage bewirkt, und wobei das Auslösen außerdem beinhaltet, dass der erste Server (302) den Dritten (304) im Namen der Datenübertragungsvorrichtung (102) anruft und eine Sprach-Datenübertragungsleitung zwischen dem Dritten (304) und der Datenübertragungsvorrichtung (102) herstellt;
Überwachen einer Click-to-call-Datenübertragung über die Sprach-Datenübertragungsleitung zwischen der Datenübertragungsvorrichtung (102) und dem Dritten (304), um eine spezielle Werbung betreffende Click-to-call-Informationen zu erzeugen;
Protokollieren der Click-to-call-Informationen in einer Protokolldatei; und
Übertragen der Click-to-call-Informationen zu dem zweiten Server (404), der derart konfiguriert ist, dass er Click-to-call-Informationen von einer Mehrzahl von Datenübertragungsvorrichtungen (102) sammelt;
wobei der zweite Server derart konfiguriert ist, dass er die Click-to-call-Informationen von jedem der Agenten (402) aggregiert, um eine Anrufaktivität für die spezielle Werbung zu messen, und der erste Server derart konfiguriert ist, dass er die aggregierten Click-to-call-Informationen zu dem Dritten überträgt.

10. System nach Anspruch 9, wobei der Server (404) die Protokolldateien zu dem Dritten(304) überträgt.

11. System nach Anspruch 9 oder 10 wobei der Agent (402) derart konfiguriert ist, dass er eine Dauer der Click-to-call-Datenübertragung überwacht und die überwachte Dauer in der Protokolldatei protokolliert.

12. System nach einem der Ansprüche 9 bis 11, wobei der Agent (402) derart konfiguriert ist, dass er überwacht, ob eine Bestätigungs-E-Mail an der mobilen Vorrichtung (102) als Reaktion darauf empfangen wurde, dass die Click-to-call-Datenübertragung hergestellt wird, und die überwachte Bestätigung in der Protokolldatei speichert.

13. System nach einem der Ansprüche 9 bis 12, wobei der Agent (402) derart konfiguriert ist, dass er Auswahlen überwacht, die als Reaktion auf den einen automatischen Dienst anbietenden Anbieter des Dritten (304) getroffen werden, und die überwachten Auswahlen in der Protokolldatei speichert.

14. System nach einem der Ansprüche 9 bis 13, wobei der Agent (402) die Anzahl von Zweiton-Mehrfrequenztönen überwacht, die während einer Datenübertragung zwischen der mobilen Vorrichtung (102) und dem Dritten (304) ausgesendet werden, und die überwachte Anzahl in der Protokolldatei speichert.

## Revendications

1. Procédé de collecte d'informations d'appel par clic entre chacun d'une pluralité de dispositifs de communication (102) et un tiers (304), le procédé comprenant les étapes consistant à :
pour chacun de la pluralité de dispositifs de communication, initier, au niveau d'un dispositif de communication individuel parmi la pluralité de dispositifs de communication (102) une fonction d'appel par clic associée à une publicité particulière, l'initiation effectuant une communication entre le dispositif de communication individuel parmi les dispositifs de communication et un premier serveur (302) par l'intermédiaire d'une requête HTTP, l'initiation comprenant également l'appel, par le premier serveur (302), du tiers (304) de la part du dispositif de communication (102) pour établir une ligne de communication vocale entre le tiers (304) et le dispositif de communication (102) ;
surveiller des communications d'appel par clic sur la ligne de communication vocale entre chacun de la pluralité de dispositifs de communication (102) et le tiers (304) pour générer des informations d'appel par clic pour chacun de la pluralité de dispositifs de communication ;
journaliser dans un fichier de journal les informations d'appel par clic pour chacun de la pluralité de dispositifs de communication (102) ;
communiquer les informations d'appel par clic à un second serveur (404) configuré pour collecter des informations d'appel par clic à partir de la pluralité de dispositifs de communication (102) ;
agréger les informations d'appel par clic en provenance de chacun de la pluralité de dispositifs de communication (102) pour mesurer une activité d'appel pour la publicité particulière ; et
communiquer les informations d'appel par clic agrégées au tiers.

2. Procédé de collecte d'informations d'appel par clic selon la revendication 1, dans lequel les dispositifs de communication sont des dispositifs mobiles (102) .

3. Procédé de collecte d'informations d'appel par clic selon la revendication 1 ou 2, dans lequel l'étape consistant à surveiller les communications d'appel par clic associées à une publicité particulière comprend la surveillance du point de savoir si une communication d'appel par clic est ou non établie entre chacun de la pluralité de dispositifs de communication (102) et le tiers (304) pour générer les informations d'appel par clic associées à une publicité particulière pour chacun de la pluralité de dispositifs de communication.

4. Procédé de collecte d'informations d'appel par clic selon la revendication 1, 2 ou 3, dans lequel l'étape consistant à surveiller les communications d'appel par clic associées à une publicité particulière comprend la surveillance d'une durée d'une communication d'appel par clic établie entre chacun de la pluralité de dispositifs de communication (102) et le tiers (304) pour générer les informations d'appel par clic associées à une publicité particulière pour chacun de la pluralité de dispositifs de communication.

5. Procédé de collecte d'informations d'appel par clic selon l'une quelconque des revendications 1 à 4, dans lequel l'étape consistant à surveiller les communications d'appel par clic associées à une publicité particulière comprend la surveillance du point de savoir si un courrier électronique de confirmation a ou non été reçu au niveau de chacun de la pluralité de dispositifs de communication en réponse à la communication d'appel par clic (340) qui est établie pour générer les informations d'appel par clic associées à une publicité particulière pour chacun de la pluralité de dispositifs de communication.

6. Procédé de collecte d'informations d'appel par clic selon l'une quelconque des revendications 1 à 5, dans lequel l'étape consistant à surveiller les communications d'appel par clic associées à une publicité particulière comprend la surveillance de sélections réalisées en réponse au fournisseur de service automatisé du tiers (304) pour générer les informations d'appel par clic associées à une publicité particulière pour chacun de la pluralité de dispositifs de communication.

7. Procédé de collecte d'informations d'appel par clic selon l'une quelconque des revendications 1 à 6, dans lequel l'étape consistant à surveiller les communications d'appel par clic associées à une publicité particulière comprend la surveillance du nombre de tonalités multifréquence de tonalité de numérotation émises durant une communication entre chacun de la pluralité de dispositifs de communication (102) et le tiers (304) pour générer les informations d'appel par clic associées à une publicité particulière pour chacun de la pluralité de dispositifs de communication.

8. Dispositif de communication (102) comprenant un processeur et une mémoire couplée à celui-ci et un sous-système de communication, couplé au processeur, pour communiquer avec un tiers (304) à l'aide d'un service d'appel par clic, le dispositif de communication (102) comprenant en outre un agent (402), ladite mémoire stockant des instructions et des données pour une exécution par le processeur pour configurer l'agent (402) pour :
pour chacun de la pluralité de dispositifs de communication, initier, au niveau d'un dispositif de communication individuel parmi la pluralité de dispositifs de communication (102), une fonction d'appel par clic associée à une publicité particulière, l'initiation effectuant une communication entre le dispositif de communication individuel parmi les dispositifs de communication et un premier serveur (302) par l'intermédiaire d'une requête HTTP, et l'initiation comprenant également l'appel, par le premier serveur (302), du tiers (304) de la part du dispositif de communication (102) et l'établissement d'une ligne de communication vocale entre le tiers (304) et le dispositif de communication (102) ;
surveiller des communications d'appel par clic sur la ligne de communication vocale entre chacun de la pluralité de dispositifs de communication (102) et le tiers (304) pour générer des informations d'appel par clic pour chacun de la pluralité de dispositifs de communication ;
journaliser dans un fichier de journal les informations d'appel par clic pour chacun de la pluralité de dispositifs de communication (102) ; et
communiquer les informations d'appel par clic à un second serveur (404) configuré pour collecter des informations d'appel par clic en provenance de la pluralité de dispositifs de communication (102) pour une agrégation ultérieure afin de mesurer une activité d'appel pour la publicité particulière et pour une communication ultérieure au tiers.

9. Système, comprenant :
un second serveur (404) pour recevoir des informations d'appel en provenance de chacun d'une pluralité de dispositifs de communication (102), chaque dispositif comprenant :
un processeur et une mémoire couplée à celui-ci et un sous-système de communication, couplé au processeur, pour communiquer avec un tiers (304) à l'aide d'un service d'appel par clic, le dispositif de communication comprenant en outre un agent (402), ladite mémoire stockant des instructions et des données pour une exécution par le processeur pour configurer l'agent (402) pour :
pour chacun de la pluralité de dispositifs de communication, initier, au niveau d'un dispositif de communication individuel parmi la pluralité de dispositifs de communication (102), une fonction d'appel par clic associée à une publicité particulière, l'initiation effectuant une communication entre le dispositif de communication individuel parmi les dispositifs de communication et un premier serveur (302) par l'intermédiaire d'une requête HTTP, et l'initiation comprenant également l'appel, par le premier serveur (302), du tiers (304) de la part du dispositif de communication (102) et l'établissement d'une ligne de communication vocale entre le tiers (304) et le dispositif de communication (102) ;
surveiller une communication d'appel par clic sur la ligne de communication vocale entre le dispositif de communication (102) et le tiers (304) pour générer des informations d'appel par clic associées à une publicité particulière ;
journaliser dans un fichier de journal les informations d'appel par clic ; et
communiquer les informations d'appel par clic au second serveur (404) configuré pour collecter des informations d'appel par clic en provenance d'une pluralité de dispositifs de communication (102),
le second serveur étant configuré pour agréger les informations d'appel par clic en provenance de chacun des agents (402) pour mesurer une activité d'appel pour la publicité particulière, et le premier serveur étant configuré pour communiquer les informations d'appel par clic agrégées au tiers.

10. Système selon la revendication 9, dans lequel le second serveur (404) communique les fichiers de journal au tiers (304).

11. Système selon la revendication 9 ou 10, dans lequel l'agent (402) est configuré pour surveiller une durée de la communication d'appel par clic et journaliser la durée surveillée dans le fichier de journal.

12. Système selon l'une quelconque des revendications 9 à 11, dans lequel l'agent (402) est configuré pour surveiller le point de savoir si un courrier électronique de confirmation a ou non été reçu au niveau du dispositif mobile (102) en réponse à la communication d'appel par clic qui est établie et stocker la confirmation surveillée dans le fichier de journal.

13. Système selon l'une quelconque des revendications 9 à 12, dans lequel l'agent (402) est configuré pour surveiller des sélections réalisées en réponse au fournisseur de service automatisé du tiers (304) et stocke les sélections surveillées dans le fichier de journal.

14. Système selon l'une quelconque des revendications 9 à 13, dans lequel l'agent (402) surveille le nombre de tonalités multifréquence de tonalité de numérotation émises durant une communication entre le dispositif mobile (102) et le tiers (304) et journalise le nombre surveillé dans le fichier de journal.
